# EUROPEAN PATENT SPECIFICATION

(11) **EP 2 230 974 B1**
(45) Date of publication and mention of the grant of the patent: **03.08.2011**
(21) Application number: 08720174.5
(22) Date of filing: 03.01.2008
(51) Int. Cl.: A47J 31/46

(54) **DELIVERING SYSTEM FOR INFUSION-TYPE BEVERAGES**
AUSGABESYSTEM FÜR AUFBRÜHGETRÄNKE
SYSTÈME DE DISTRIBUTION DE BOISSONS DE TYPE INFUSIONS

(43) Date of publication of application: 29.09.2010
(73) Proprietor: BABAS S.R.L., 40012 Calderara di Reno (BO) (IT)
(72) Inventor: NANI, Roberto, I-24020 Ranica (BG) (IT)
(74) Representative: Rapisardi, Mariacristina
(86) International application number: PCT/IT2008/000004
(87) International publication number: WO 2009/084060

(56) References cited:
- EP-A- 1 097 663
- WO-A-94/00045

## Description

The present invention refers to a delivering system for infusion-type beverages, in particular for preparing and administering both hot and cold beverages.

As known, the prior art proposes an extremely wide variety of automatic or semi-automatic machines equipped with a preparing and delivering unit adapted to produce an infusion by making hot water pas through a capsule containing the essence to be infused, such as for example tea, coffee, tisanes, etc.

The worst inconvenience of this type of machines is that the boiler unit responsible for heating infusion water must be as near as possible to the infusion point, so that water itself has no time to get cooler before passing through the substance to be infused, this making the infusion impossible, or at least with a very low quality.

Such limiting characteristic prevents to be able to remotely arranging the boiler unit with respect to the delivering unit, that comprises the infusion point, this being for example preferable in case one wishes to have only the delivering unit available at hand, for example on a kitchen plane or on a bar counter, and the boiler unit in a more remote position and possibly not visible, making the existing machines relatively encumbrant.

The prior art instead has no machine that allows, through a single delivering system for infusion-type beverages, preparing and administering both hot and cold Document EP-A-1097663 discloses a delivering system according to the preamble of independent claim 1.

Therefore, object of the present invention is solving the above prior art problems by providing a delivering system for infusion-type beverages that allows spatially separating and moving away at will or according to needs, the water heating unit and the infusion and delivering unit of the beverage without affecting the cooling of heated water during its path from the first to the second unit.

Another object of the present invention is providing a delivering system for infusion-type beverages that allows preparing and administering both hot and cold beverages.

The above and other objects and advantages of the invention, as will result from the following description, are obtained with a delivering system for infusion-type beverages as claimed in claim 1.

Preferred embodiments and non-trivial variations of the present invention are the subject matter of the dependent claims.

It will be immediately obvious that numerous variations and modifications (for example related to shape, sizes, arrangements and parts with equivalent functionality) can be made to the described system without departing from the scope of the invention as appears from the enclosed claims.

The present invention will be better described by some preferred embodiments thereof, provided as a nonlimiting example, with reference to the enclosed drawings, in which:
- FIG. 1 shows a block diagram that schematically shows the various components of a preferred embodiment of the delivering system according to the present invention for preparing hot beverages; and
- FIG. 2 shows a block diagram that schematically shows the various components of a preferred embodiment of the delivering system according to the present invention for preparing both hot and cold beverages.

In brief, herein below the descriptions related to parts and components common to other systems for delivering infusion-type beverages and necessary for the basic operation of the system itself, will obviously be done without, since they are anyway deemed as widely known in the art or within reach of any technician in the field, such as for example electric supply and control systems, air-conditioning systems, type and arrangement of channels, etc., to deal in particular detail with aspects and components characterising the system 1 according to the present invention.

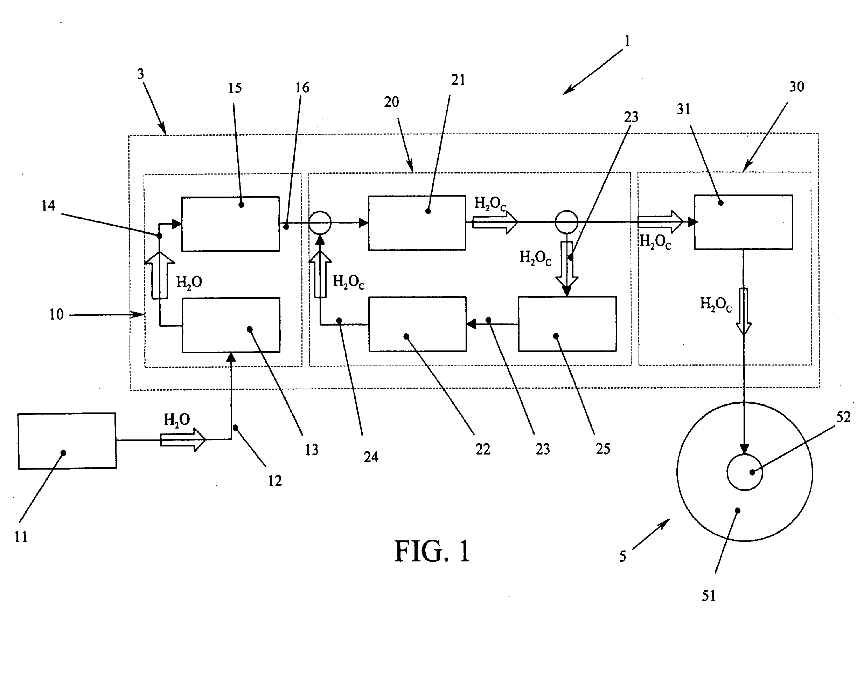

With reference then in particular to FIG. 1, it is possible to note that the delivering system 1 for infusion-type beverages according to the present invention comprises at least one water heating unit 3 and at least one beverage infusion and delivering unit 5, the heating unit 3 comprising at least one first water supply line 10, at least one circuit 20 for heating and recirculating hot water and at least one second supply line 30 for heated water (designated in the Figures as H₂O_{C}) from the circuit 20 for heating and recirculating hot water to the beverage infusion and delivering unit 5. In particular, the first water supply line 10 comprises at least one first pump 13 that draws supply water (designated in the Figures as H₂O), for example through at least one first duct 12 from at least one water tank 11, in order to send it through at least one second and one third duct, respectively 14 and 16, to the circuit 20 for heating and recirculating hot water, preferably by interposing at least one first flow-meter 15. The first flow-meter 15 is obviously necessary for measuring the amount of water to be inserted in the circuit 20 for heating and recirculating hot water and consequently controlling the operation of the first pump 13, such amount being preferably the one necessary for preparing at least one standard dose (cup or small cup) of hot infused beverage.

The circuit 20 for heating and recirculating hot water then comprises at least one water heating means 21, such as for example at least one electric boiler, and at least one recirculating pump 22 that, for example through at least one fourth and one fifth duct, respectively 23 and 24, realise an annular circuit for heated water (designated in the Figures as H₂O_{C}) from the water heating means 21. The circuit 20 for heating and recirculating hot water further comprises at least one first valve or solenoid valve 25 for controlling the delivery, preferably arranged downstream of the water heating means 21 and upstream of the recirculating pump 22, and normally open under rest conditions of the system 1 according to the present invention.

The circuit 20 for heating and recirculating hot water then communicates with the beverage infusion and delivering unit 5 through the second supply line 30 along which at least one, suitably calibrated check valve 31 is arranged. In particular, the check valve 31 is calibrated so that, under rest conditions of the system 1 according to the present invention, the pressure of heated water H₂O_{C} circulating inside the circuit 20 for heating and recirculating hot water is not enough to win the resistance of the check valve 31 itself and therefore goes on, under the thrust of the recirculating pump 22, flowing through the circuit 20 for heating and recirculating hot water, and being constantly and periodically heated by the boiler 21.

Instead, in case the delivering system 1 passes to a condition for preparing and delivering a hot beverage, the first valve or solenoid valve 25 for controlling the delivery is closed: consequently, the pressure of heated water H₂O_{C} inside the circuit 20 for heating and recirculating hot water, under the thrust action of the recirculating pump 22 and not being able to recirculate inside the circuit itself, progressively increases till it reaches such a pressure value as to win the resistance of the check valve 31, and flows through the second supply line 30 till the beverage infusion and delivering unit 5: the beverage infusion and delivering unit 5 will then comprise at least one containing seat 51 of the essence to be infused, preferably contained inside a substantially known capsule, through which, with suitable and substantially known means 52, heated water H₂O_{C} coming from the second supply line 30 will be conveyed, in order to then go out, through a suitable delivering nozzle or mouth as hot beverage, such as for example coffee, tea, tisanes, etc.

As previously described, the system 1 according to the present invention therefore allows spatially separating and moving away, at will or according to need, the water heating unit 3 and the beverage infusion and delivering unit 5 without impairing the cooling of heated water during its path from the first to the second unit, since infusion water, and consequently also the ducts inside which it is constantly or periodically made flow, remain heated also during rest periods of the system 1 due to the circuit 20 for heating and recirculating hot water.

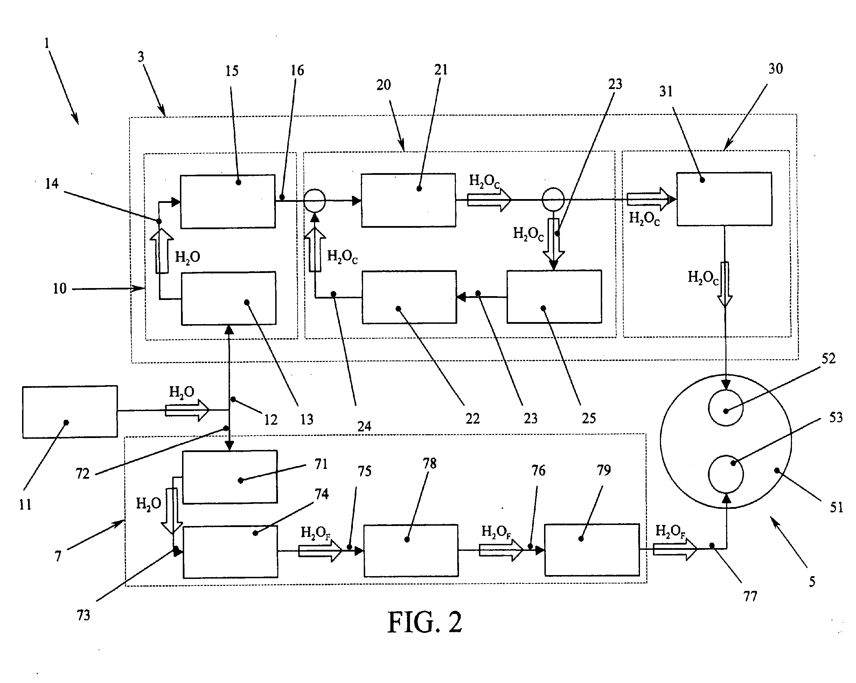

With reference now to FIG. 2, it is possible to note that the delivering system 1 for infusion-type beverages according to the present invention can further comprise at least one water cooling unit 7 adapted to supply the beverage infusion and delivering unit 5 with cooled water H₂O_{F} for preparing cold infusion-type beverages, such as for example orange juices, fruit juices, etc., the water cooling unit 7 comprising at least one second pump 71 that draws supply water H₂O, for example by means of at least one sixth duct 72 from the water tank 11, or from a further different tank (not shown), in order to send it, through at least one seventh duct 73 and at least one water cooling means 74, preferably made as at least one refrigerating unit; from the water cooling means 74, cooled water H₂O_{F} is then conveyed through other suitable ducts, respectively 75, 76 and 77, to the beverage infusion and delivering unit 5, passing through at least one second flow-meter 78 and at least one second valve or solenoid valve 79 for controlling the delivery. Also in this case, the second flow-meter 78 is obviously necessary for measuring the amount of cooled water H₂O_{F} to be inserted into the beverage infusion and delivering unit 5, and consequently controlling the operation of the second pump 71, such amount being preferably the necessary one for preparing at least one standard dose (cup or glass) of cold infused beverage.

Under rest conditions of the system 1 according to the present invention, the second valve or solenoid valve 79 for controlling the delivery is closed and the second pump 71 is stopped. Instead, in case the delivering system 1 passes to a condition for preparing and delivering a cold beverage, the second valve or solenoid valve 79 for controlling the delivery is opened and the second pump 71 is activated in order to supply, through suitable, substantially known means 53, the containing seat 51 of the essence to be infused of the beverage infusion and delivering unit 5 with cooled water H₂O_{F}, that afterwards goes out through the delivery nozzle or mouth as cold beverage.

## Claims

1. Delivering system (1) for infusion-type beverages comprising at least one water heating unit (3) and at least one beverage infusion and delivering unit (5) said heating unit (3) comprising at least one first water supply line (10), at least one circuit (20) for heating and recirculating hot water and at least one second supply line (30) of heated water H₂O_{C} from said circuit (20) for heating and recirculating hot water, to said beverage infusion and delivering unit (5), **characterised in that** said first water supply line (10) has at least one first pump (13) for drawing supply water in order to send it to said circuit (20) for heating and recirculating hot water, said circuit (20) for halting and recirculating hot water comprising at least one water heating means (21) and at least one recirculating pump (22) in order to make, through at least one fourth and one fifth duct (23, 24), an annular circuit for said heated water H₂O_{C} from said water heating means (21), said circuit (20) for heating and recirculating hot water comprising at least one solenoid valve (25) for controlling a delivery arranged between said water heating means (21) and said recirculating pump (22).

2. Delivering system (1) according to claim 1, **characterised in that** said first water supply line (10) comprises said at least one first pump (13) for drawing said supply water H₂O from at least one water tank (11) in order to send it to said circuit (20) for heating and recirculating hot water.

3. Delivering system (1) according to claim 2, **characterised in that** at least one first flow-meter (15) is arranged between said pump (13) and said circuit (20) for heating, and recirculating hot water.

4. Delivering system (1) according to claim 1, **characterised in that** said water heating meant (21) is at least one electric boiler.

5. Delivering system (1) according to claim 1, **characterised in that**, under rest conditions of said system (1), said solenoid valve (25) for controlling the delivery is open, and under conditions for preparing and delivering a hot beverage of said system (1), said solenoid valve (25) for controlling the delivery is closed.

6. Delivering system (1) according to claim 1, **characterised in that** said circuit (20) for heating and recirculating hot water communicates with said beverage infusion and delivering unit (5) through said second supply line (30) along which at least one calibrated check valve (31) is arranged.

7. Delivering system (1) according to claim 6, **characterised in that** said check valve (31) is calibrated so that, under said rest condition of said system (1), a pressure of said heated water H₂O_{C} circulating inside said circuit (20) for heating and recirculating hot water is not enough to win a resistance of said check valve (31).

8. Delivering system (1) according to claim 1, **characterised, in that** it comprises at least one water cooling unit (7) adapted to supply said beverage, infusion and Delivering unit (5) with cooled water H₂O_{F}.

9. Delivering system (1) according to claim 8, **characterised in that** said water cooling unit (7) comprises at least one second pump (71) adapted to draw supply water H₂O from said water tank (11) in order to send it to at least one water cooling means (74), from said water cooling means (74) said cooled water H₂O_{F}, being then adapted to be conveyed to said beverage infusion and delivering unit (5) through at least one second flow-meter (78) and at least one second valve or solenoid valve (79) for controlling a delivery.

10. Delivering system (1) according to claim 9, **characterised in that**, under a rest condition of said system (1) said second valve or solenoid valve (79) for controlling the delivery is closed and said second pump (71) is stepped, and, under a condition of said system (1) for preparing and delivering a cold beverage, said seconds valve or solenoid valve (79) for controlling the delivery is open and said second pump (71) is activated.

## Patentansprüche

1. Ausgabesystem (1) für Getränke des Aufguss-Typs, umfassend mindestens eine Wassererhitzungseinheit (3) und mindestens eine Getränkeaufguss- und Ausgabeeinheit (5), wobei die Erhitzungseinheit (3) mindestens eine erste Wasserversorgungsleitung (10), mindestens einen Kreislauf (20) zum Erhitzen und Rezirkulieren von Heißwasser und mindestens eine zweite Versorgungsleitung (30) von erhitztem Wasser H₂O_{C} vom Kreislauf (20) zum Erhitzen und Rezirkulieren von Heißwasser zur Getränkeaufguss- und Ausgabeeinheit (5) umfasst, **dadurch gekennzeichnet, dass** die erste Wasserversorgungsleitung (10) mindestens eine erste Pumpe (13) zum Ansaugen von Versorgungswasser aufweist, um es zum Kreislauf (20) zum Erhitzen und Rezirkulieren von Heißwasser zu befördern, wobei der Kreislauf (20) zum Erhitzen und Rezirkulieren von Heißwasser mindestens ein wassererhitzungsmittel (21) und mindestens eine Rezirkulationspumpe (22) umfasst, um durch mindestens eine vierte und eine fünfte Rohrleitung (23, 24) einen ringförmigen Kreislauf für das erhitzte Wasser H₂O_{C} vom Wassererhitzungsmittel (21) herzustellen, wobei der Kreislauf (20) zum Erhitzen und Rezirkulieren von Heißwasser mindestens ein Magnetventil (25) zur Steuerung einer Ausgabe umfasst, das zwischen dem Wassererhitzungsmittel (21) und der Rezirkulationspumpe (22) angeordnet ist.

2. Ausgabesystem (1) nach Anspruch 1, **dadurch gekennzeichnet, dass** die erste Wasserversorgungsleitung (10) die mindestens eine erste Pumpe (13) zum Ansaugen des Versorgungswassers H₂O von mindestens einem Wassertank (11) umfasst, um es zum Kreislauf (20) zum Erhitzen und Rezirkulieren von Heißwasser zu befördern.

3. Ausgabesystem (1) nach Anspruch 2, **dadurch gekennzeichnet, dass** zwischen der Pumpe (13) und dem Kreislauf (20) zum Erhitzen und Rezirkulieren von Heißwasser mindestens ein erster Durchflussmesser (15) angeordnet ist.

4. Ausgabesystem (1) nach Anspruch 1, **dadurch gekennzeichnet, dass** das Wassererhitzungsmittel (21) mindestens ein elektrischer Kessel ist.

5. Ausgabesystem (1) nach Anspruch 1, **dadurch gekennzeichnet, dass** das Magnetventil (25) zur Steuerung der Ausgabe im Ruhezustand des Systems (1) geöffnet ist und das Magnetventil (25) zur Steuerung der Ausgabe im Zubereitungs- und Ausgabezustand eines Heißgetränks des Systems (1) geschlossen ist.

6. Ausgabesystem (1) nach Anspruch 1, **dadurch gekennzeichnet, dass** der Kreislauf (20) zum Erhitzen und Rezirkulieren von Heißwasser mit der Getränkeaufguss- und Ausgabeeinheit (5) durch die zweite Versorgungsleitung (30) verbunden ist, entlang welcher mindestens ein kalibriertes Rückschlagventil (31) angeordnet ist.

7. Ausgabesystem (1) nach Anspruch 6, **dadurch** gekenntzeichnet, dass das Rückschlagventil (31) kalibriert ist, so dass im Ruhezustand des Systems (1) ein Druck des erhitzten Wassers H₂O_{C}, das im Kreislauf (20) zum Erhitzen und Rezirkulieren von Heißwasser zirkuliert, nicht genügt, um einen Widerstand des Rückschlagventils (31) zu erlangen.

8. Ausgabesystem (1) nach Anspruch 1, **dadurch gekennzeichnet, dass** es mindestens eine Wasserkühlungseinheit (7) umfasst, die dazu geeignet ist, die Getränkeaufguss- und Ausgabeeinheit (5) mit gekühltem Wasser H₂O_{F} zu versorgen.

9. Ausgabesystem (1) nach Anspruch 8, **dadurch gekennzeichnet, dass** die Wasserkühlungseinheit (7) mindestens eine zweite Pumpe (71) umfasst, die dazu geeignet ist, Versorgungswasser H₂O vom Wassertank (11) anzusaugen, um es an mindestens ein vorhandenes Wasserkühlungsmittel (74) zu befördern, wobei das gekühlte Wasser H₂O_{F} vom Wasserkühlungsmittel (74) anschließend dazu geeignet ist, an die Getränkeaufguss- und Ausgabeeinheit (5) durch mindestens einen zweiten Durchflussmesser (78) und mindestens ein zweites Ventil oder Magnetventil (79) zur Steuerung einer Ausgabe ausgegeben zu werden.

10. Ausgabesystem (1) nach Anspruch 9, **dadurch** gekenntzeichnet, dass das zweite Ventil oder Magnetventil (79) zur Steuerung der Ausgabe im Ruhezustand des Systems (1) geschlossen und die zweite Pumpe (71) angehalten ist und das zweite Ventil oder Magnetventil (79) zur Steuerung der Ausgabe in einem Zubereitungs- und Ausgabezustand eines Kaltgetränks des Systems (1) geöffnet und die zweite Pumpe (71) aktiviert ist.

## Revendications

1. Système de distribution (1) de boissons de type infusion comprenant au moins une unité de chauffage d'eau (3) et au moins une unité d'infusion et de distribution de boissons (5), ladite unité de chauffage (3) comprenant au moins une première conduite d'alimentation en eau (10), au moins un circuit (20) servant à chauffer et à recycler l'eau chaude, et au moins une seconde conduite d'alimentation (30) en eau chauffée H₂O_{C} provenant dudit circuit (20) servant à chauffer et à recycler l'eau chaude destinée à ladite unité d'infusion et de distribution de boissons (5), **caractérisé en ce que** ladite première conduite d'alimentation en eau (10) présente au moins une première pompe (13) servant à aspirer l'eau d'alimentation pour l'envoyer vers ledit circuit (20) servant à chauffer et à recycler l'eau chaude, ledit circuit (20) servant à chauffer et à recycler l'eau chaude comprenant au moins un moyen de chauffage d'eau (21) et au moins une pompe de circulation (22) afin de former, avec au moins un quatrième conduit et un cinquième conduit (23, 24), un circuit annulaire pour ladite eau chauffée H₂O_{C} provenant dudit moyen de chauffage d'eau (21), ledit circuit (20) servant à chauffer et à recycler l'eau chaude comprenant au moins une électrovanne (25) servant à régler un débit située entre ledit moyen de chauffage d'eau (21) et ladite pompe de circulation (22).

2. Système de distribution (1) selon la revendication 1, **caractérisé en ce que** ladite première conduite d'alimentation en eau (10) comprend ladite au moins une première pompe (13) servant à aspirer ladite eau d'alimentation H₂O dans au moins un réservoir d'eau (11), afin de l'envoyer vers ledit circuit (20) servant à chauffer et à recycler l'eau chaude.

3. Système de distribution (1) selon la revendication 2, **caractérisé en ce qu'**au moins un premier débitmètre (15) se situe entre ladite pompe (13) et ledit circuit (20) servant à chauffer et à recycler l'eau chaude.

4. Système de distribution (1) selon la revendication 1, **caractérisé en ce que** ledit moyen de chauffage d'eau (21) est au moins une chaudière électrique.

5. Système de distribution (1) selon la revendication 1, **caractérisé en ce que**, dans des conditions de repos dudit système (1), ladite électrovanne (25) servant à régler le débit est ouverte, et dans des conditions de préparation et de distribution d'une boisson chaude dudit système (1), ladite électrovanne (25) servant à régler le débit est fermée.

6. Système de distribution (1) selon la revendication 1, **caractérisé en ce que** ledit circuit (20) servant à chauffer et à recycler l'eau chaude, communique avec ladite unité d'infusion et de distribution de boissons (5) par ladite seconde conduite d'alimentation (30), le long de laquelle se situe au moins une vanne d'arrêt tarée (31).

7. Système de distribution (1) selon la revendication 6, **caractérisé en ce que** ladite vanne d'arrêt (31) est tarée de sorte que, dans ladite condition de repos dudit système (1), une pression de ladite eau chauffée H₂O_{C} circulant à l'intérieur dudit circuit (20) servant à chauffer et à recycler l'eau chaude, n'est pas suffisante pour vaincre une résistance de ladite vanne d'arrêt (31).

8. Système de distribution (1) selon la revendication 1, **caractérisé en ce qu'**il comprend au moins une unité de refroidissement d'eau (7) appropriée pour alimenter en eau refroidie H₂O_{F} l'unité d'infusion et de distribution de boissons (5).

9. Système de distribution (1) selon la revendication 8, **caractérisé en ce que** ladite unité de refroidissement d'eau (7) comprend au moins une seconde pompe (71) adaptée pour aspirer l'eau d'alimentation H₂O dans ledit réservoir d'eau (11), afin de l'envoyer vers au moins un moyen de refroidissement d'eau (74), depuis ledit moyen de refroidissement d'eau (74), ladite eau refroidie H₂O_{F} étant ensuite adaptée pour être acheminée vers ladite unité d'infusion et de distribution de boissons (5) via au moins un second débitmètre (78) et au moins une seconde vanne ou électrovanne (79) servant à régler un débit.

10. Système de distribution (1) selon la revendication 9, **caractérisé en ce que**, dans une condition de repos dudit système (1), ladite seconde vanne ou électrovanne (79) servant à régler le débit, est fermée et ladite seconde pompe (71) est arrêtée, et, dans une condition dudit système (1) de préparation et de distribution d'une boisson froide, ladite seconde vanne ou électrovanne (79) servant à régler le débit, est ouverte et ladite seconde pompe (71) est activée.
